# EUROPÄISCHE PATENTSCHRIFT

(11) **EP 3 161 425 B1**
(45) Veröffentlichungstag und Bekanntmachung des Hinweises auf die Patenterteilung: **07.03.2018**
(21) Anmeldenummer: 15731844.5
(22) Anmeldetag: 10.06.2015
(51) Int. Cl.: G01F 15/14, E03B 7/07

(54) **ZÄHLERGEHÄUSE AUS KUNSTSTOFF, INSBESONDERE FÜR EINEN FLUIDZÄHLER**
PLASTIC CASING FOR A METER, PREFERABLY A FLUID METER
BOÎTIER EN MATIÈRE PLASTIQUE POUR UN MÈTRE, DE PRÉFÉRENCE UN COMPTEUR DE FLUIDE

(30) Priorität: 25.06.2014 DE 102014009441
(43) Veröffentlichungstag der Anmeldung: 03.05.2017
(73) Patentinhaber: Diehl Metering GmbH, 91522 Ansbach (DE)
(72) Erfinder: GRONAUER, Christoph, 90602 Pyrbaum (DE); SIEGEL, Daniel, 27568 Bremerhaven (DE); MAIER, Moritz, 27570 Bremerhaven (DE); NIEBUHR, Nils, 27570 Bremerhaven (DE); FRANK, Marvin, 27568 Bremerhaven (DE)
(74) Vertreter: Diehl Patentabteilung
(86) Internationale Anmeldenummer: PCT/EP2015/001161
(87) Internationale Veröffentlichungsnummer: WO 2015/197160

(56) Entgegenhaltungen:
- WO-A1-2009/129885
- WO-A1-2013/150430
- DE-A1-102007 004 826
- DE-A1-102012 018 477
- US-A- 4 422 325

## Beschreibung

Die Erfindung betrifft ein Zählergehäuse aus Kunststoff, insbesondere für einen Fluidzähler, umfassend einen napfartigen Körper mit einem Boden und einer daran anschließenden ringförmigen Wand mit daran angeformten, in das Körperinnere führenden hohlen Anschlussstutzen.

Zähler kommen zumeist zur Erfassung des Durchflusses eines Fluids, beispielsweise Wasser, zum Einsatz, um einen entsprechenden Verbrauch zu ermitteln. Ein Zähler besteht üblicherweise aus einem Zählergehäuse, das von seiner Grundform her napfartig ist. In dieses Zählergehäuse ist eine Messkapsel eingesetzt, die die eigentlichen, für die Messung relevanten Bauelemente aufweist. Zum Einsetzen des Zählers sind am Zählergehäuse entsprechende Anschlussstutzen vorgesehen, die davon abragen und als hohle Stutzen in das Gehäuseinnere führen, so dass das zu vermessende Fluid ein- und ausströmen kann. Der grundsätzliche Aufbau eines solchen Zählers ist hinlänglich bekannt.

Üblicherweise ist ein solches Zählergehäuse aus Messing gefertigt. Dies deshalb, als Messing einfach zu bearbeiten ist, keine Korrosion zeigt und hinreichend stabil ist. Nachteilig jedoch ist das relativ hohe Gewicht des metallenen Zählergehäuses. Alternativ zu einem metallenen Messinggehäuse ist es auch bekannt, das Zählergehäuse aus Kunststoff zu fertigen. Ein solches Zählergehäuse ist vom Gewicht her leichter. Probleme können sich jedoch hinsichtlich der Stabilität ergeben, da das Kunststoffmaterial eine deutlich geringere Druck- und Zugfestigkeit aufweist als Messing. D. h., dass das Kunststoffmaterial bei Druckbelastung zur Deformation neigt. Solche Drucklasten sind natürlich auch bei Zählergehäusen gegeben, da das zu vermessende Fluid mit hinreichendem Druck durch das Zählergehäuse strömt respektive ein entsprechender Nenndruck anliegt, der im Bereich mehrerer Bar liegt. Darüber hinaus sind bei der Auslegung eines Zählergehäuses auch entsprechende Überlast- respektive Extremdrucke zu berücksichtigen, mithin also Druckspitzen, die in der Regel dem Mehrfachen des Nenndrucks entsprechen. Aus diesem Grund ist es erforderlich, die Wanddicke des Gehäuses sehr groß zu wählen, da jedwede Deformation, insbesondere eine Verschiebung der Anschlussstutzen gegeneinander in einer der drei Raumrichtungen, vermieden werden muss. Dies macht das Gehäuse einerseits großvolumig, andererseits aber auch wieder relativ schwer, so dass letztlich kaum Vorteile, verglichen mit der Messingausführung, gegeben sind.

Aus der WO 2013/150430 A1 ist ein Gaszähler bekannt, dessen mit Anschlussstutzen ausgestattetes Gehäuse mit Versteifungsrippen versehen ist, welche in Form eines Kreises sowie von diesem Kreis nach außen strahlenförmig verlaufenden Stegen ausgebildet sind.

In der WO 2009/129885 A1 ist eine Ultraschall-Messanordnung zur Durchfluss-, Schallgeschwindigkeits-, Dichte-, Viskositäts- und/oder Temperaturmessung fließfähiger Medien beschrieben, welche im Inneren ihres Gehäuses ein eine Messstrecke aufweisendes Messrohr aufweist, das mit Versteifungsrippen ausgestattet ist.

Der Erfindung liegt das Problem zugrunde, ein Zählergehäuse aus Kunststoff anzugeben, das demgegenüber verbessert ist.

Zur Lösung dieses Problems ist bei einem Zählergehäuse der eingangs genannten Art erfindungsgemäß vorgesehen, dass an der Außenseite des Bodens mehrere von einem Zentrum strahlenförmig abgehende, sich verzweigende und zum Bodenrand laufende Rippen und an der Außenseite der Wand mehrere, einander zumindest zum Teil kreuzende und über wenigstens einen Teil der Wandhöhe laufende Wandrippen ausgebildet sind.

Das erfindungsgemäße Zählergehäuse zeichnet sich durch eine besondere Rippenstruktur am Boden sowie der Wand aus. Bodenseitig ist eine sternförmige Rippenstruktur vorgesehen. Ausgehend von einem Zentrum laufen mehrere, beispielsweise sechs Rippen radial zum Bodenrand, wobei sich die Rippen bevorzugt ein- oder mehrmals verzweigen, worauf im Detail nachfolgend noch eingegangen wird. Das Zentrum kann, je nach Anordnung der Anschlussstutzen, mittig am kreisförmigen Boden oder außermittig angeordnet sein. Es liegt bevorzugt auf oder nahe der Verbindungslinie der Mitte der Anschlussstutzen. Sind die Anschlussstutzen symmetrisch am zylinderförmigen Körper angeordnet, also am maximalen Körperdurchmesser, so befindet sich das "Strahlenzentrum" bevorzugt in der Bodenmitte. Sind die Anschlussstutzen jedoch leicht versetzt zur Bodenmitte angeordnet, so ist auch das "Strahlenzentrum" entsprechend außermittig angeordnet. Durch die Ausbildung einer solchen strahlen- oder sternförmigen, sich vorzugsweise mehrfach verzweigenden Rippenstruktur an der Bodenaußenseite kann die Steifigkeit in diesem Bereich deutlich erhöht werden, wobei sich eine relativ homogene Spannungsverteilung über die Rippenstruktur bei gegebenem Innendruck einstellt. Auch bei hohem Innendruck kommt es in diesem Bereich zu keiner Deformation oder Auswölbung des Gehäusekörpers.

Neben der spezifischen Rippenstruktur am Boden weist auch die Außenseite der Wand eine spezifische Wandrippenstruktur auf, die jeweils an den freien Wandabschnitten zwischen den Anschlussstutzen gegeben ist. Wandseitig sind mehrere Wandrippen ausgebildet, die quasi schräg über die Wand laufen, sich also über wenigstens einen Teil der Wandhöhe erstrecken und einander zumindest zum Teil kreuzen. Durch diese spezifische "Kreuzrippenstruktur" wird eine diagonale Versteifung zwischen den Anschlussstutzen und den Seitenwänden erreicht, was der Torsionssteifigkeit zuträglich ist. Auch wird
hierüber einer Zug- oder Druckbelastung zwischen den Anschlussstutzen vorteilhaft entgegengewirkt, wie auch ein seitlicher Einfall der Seitenwände hierüber verhindert wird.

Durch das Zusammenspiel der beiden erfindungsgemäß vorgesehenen, spezifischen Boden- und Wandrippenstrukturen ergibt sich somit ein sowohl hinsichtlich etwaiger Zug- und Druckbelastungen als auch einer Torsionsbelastung extrem steifes Zählergehäuse, das auch extremen Druckspitzen ohne Weiteres standhält. Durch Ausbildung dieser spezifischen Strukturen kann folglich das benötigte Materialvolumen deutlich reduziert werden, wie sich durch die Rippenstruktur auch Steifigkeitsvorteile, verglichen mit einer rippenfreien, lediglich durch die große Wanddicke versteiften Gehäuseausgestaltung ergeben. Das Gehäuse ist folglich in seinen mechanischen Eigenschaften gegenüber bisher bekannten Kunststoffzählergehäusen verbessert, wie es auch deutlich leichter ausgeführt werden kann.

Wie beschrieben zeichnet sich die Struktur der bodenseitigen Rippen durch eine strahlen- oder sternförmige Grundform aus. Die Rippen verzweigen sich auf dem Weg zum Bodenrand wenigstens einmal. Diese Verzweigungsstruktur kann quasi symmetrisch sein, insbesondere wenn die beiden Anschlussstutzen am maximalen Durchmesser des Körpers angeordnet und das Strahlenzentrum bodenmittig ist. Sind jedoch die Anschlussstutzen zur Bodenmitte und auch das Strahlenzentrum zur Bodenmitte leicht verschoben, so kann sich auch, bezogen auf die jeweiligen Bodenseiten, ein asymmetrisches Verzweigungsprofil ergeben.

Bevorzugt verzweigen sich gemäß einer zweckmäßigen Weiterbildung der Erfindung zumindest ein Teil der bodenseitigen Rippen ausgehend von einem zentralen Rippenabschnitt, der vom Zentrum abgeht, ein erstes Mal in zwei auseinanderlaufende zweite Rippenabschnitte, die sich ihrerseits wiederum zumindest teilweise ein zweites Mal in jeweils zwei dritte Rippenabschnitte verzweigen. D. h., dass sich manche oder alle Rippen, je nachdem, ob letztlich ein symmetrisches oder asymmetrisches Rippenprofil gegeben ist, zweimal verzweigen.

Die Höhe der Rippen spielt im Hinblick auf die Steifigkeit ebenfalls eine wichtige Rolle. Die maximale Rippenhöhe darf nicht zu niedrig sein, sie sollte jedoch 25 mm nicht übersteigen. Bevorzugt beträgt die maximale Rippenhöhe ca. 15 mm, gegebenenfalls auch weniger, beispielsweise 10 mm. Diese maximale Rippenhöhe ist zumindest im Bereich des Zentrums gegeben. Diese Rippenhöhe kann bis nahezu zum Bodenrand beibehalten werden, bevorzugt jedoch nimmt die Höhe zumindest eines Teils der Rippen, bevorzugt natürlich aller Rippen, zum Bodenrand hin ab. Es ergibt sich damit eine, in einer Seitenansicht gesehen, etwas gewölbte Grundform der Rippenstruktur. In diesem Fall ist es zweckmäßig, wenn die Rippen im Zentrumsbereich über eine bestimmte Rippenlänge eine konstante Höhe aufweisen, mithin also quasi eine Ebene gegeben ist, die ein Aufstellen des Gehäuses ermöglicht.

Die Breite der Rippen kann zwischen 0,5 mm und 6 mm betragen, bevorzugt wird sie, um die Herstellung des Zählergehäuses in einer Spritzgussform zu erleichtern, im Bereich von ca. 3 - 4 mm liegen. Dabei kann sich die Rippenbreite zum Bodenrand hin auch verändern, d. h., dass die Rippen, insbesondere die durch Verzweigung gegebenen Rippenabschnitte, zum Bodenrand hin etwas schmäler werden. Die Steifigkeit bleibt trotz allem gegeben, nachdem der Boden zum Rand hin aufgrund des Übergangs zur anschließenden zylindrischen Wand in diesem Bereich ohnehin wesentlich druckfester ist als im Bereich der Bodenmitte.

Zweckmäßig ist es ferner, wenn bodenseitig ein oder mehrere wenigstens zwei Rippen oder Rippenabschnitte verbindende Verbindungsstege vorgesehen sind, die zu einer zusätzlichen Aussteifung der Rippenstruktur führen. Bevorzugt sind nur zwei Verbindungsstege vorgesehen, die benachbart zu den Anschlussstutzen verlaufen. Sie können geradlinig ausgeführt sein, bevorzugt jedoch verlaufen sie leicht bogenförmig, d. h., sie folgen der Kreisform des Bodenrandes, zu dem sie benachbart angeordnet sind. Diese Verbindungsstege sind für die Kompensation eines Torsionsmoments zweckmäßig.

Die Wandrippen sind bevorzugt im gesamten Wandbereich zwischen den beiden Anschlussstutzen vorgesehen. Sie dienen insbesondere der Realisierung einer hohen Torsionssteifigkeit, was durch ihre diagonale respektive kreuzende Anordnung realisiert wird. Die Höhe der Wandrippen sollte maximal 15 mm betragen, je nach Größe des Gehäuses kann sie auch nur maximal 10 mm betragen.

Auch hier kann die Höhe zumindest eines Teils der Wandrippen zum Boden hin abnehmen, d. h., dass sich auch dort eine, in einer Seitenansicht gesehene, leicht bogenförmige Struktur ergibt. Auch können die näher zum jeweiligen Anschlussstutzen angeordneten Wandrippen etwas höher sein als die weiter entfernt angeordneten Wandrippen, nachdem insbesondere im Bereich des Anschlussstutzens ein etwaiges Torsionsmoment gegeben sein kann und gerade dort eine hohe Torsionssteifigkeit zweckmäßig ist.

Die Breite der Wandrippen sollte bevorzugt zwischen 0,5 mm und 6 mm betragen, bevorzugt liegt sie im Bereich zwischen 2 - 3 mm. Die Rippenbreite kann über alle Wandrippen gleich sein, denkbar ist es aber auch, die stutzennahen Wandrippen etwas breite auszuführen als die stutzenfernen Wandrippen.

Das Breitenverhältnis zwischen den Bodenrippen und den Wandrippen ist je nach Anwendungsfall auszulegen. Die Rippen können grundsätzlich gleich breit sein, denkbar ist es aber auch, dass sich die jeweilige Rippenbreite unterscheidet, gegebenenfalls auch nur in Bezug auf einzelne Rippen.

Das Zählergehäuse selbst ist bevorzugt ein Spritzgussteil aus einem technischen Kunststoff, der bevorzugt gefüllt ist. Bevorzugt wird hierbei PPA oder PA, wobei diese Aufzählung nicht abschließend ist.

Neben dem Zählergehäuse selbst betrifft die Erfindung ferner einen Zähler, insbesondere einen Wasserzähler, umfassend ein erfindungsgemäßes Zählergehäuse der beschriebenen Art. Neben dem Zählergehäuse umfasst ein solcher Zähler üblicherweise auch eine in das Zählergehäuse eingesetzte Messkapsel, die der eigentlichen Messwerterfassung dient, was hinlänglich bekannt ist.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung eines erfindungsgemäßen Zählers mit einem erfindungsgemäßen Zählergehäuse vor seiner Montage in eine Rohrleitung,
- Fig. 2: eine Perspektivansicht des erfindungsgemäßen Zählergehäuses mit Blick von oben in das Zählergehäuse,
- Fig. 3: eine Stirnansicht des Zählergehäuses aus Fig. 2 mit Blick in einen Anschlussstutzen,
- Fig. 4: eine Perspektivansicht des Zählergehäuses aus Fig. 2 mit Blick auf die Unterseite des Zählergehäuses,
- Fig. 5: eine Aussicht auf die Unterseite des Zählergehäuses, und
- Fig. 6: eine Seitenansicht des Zählergehäuses.

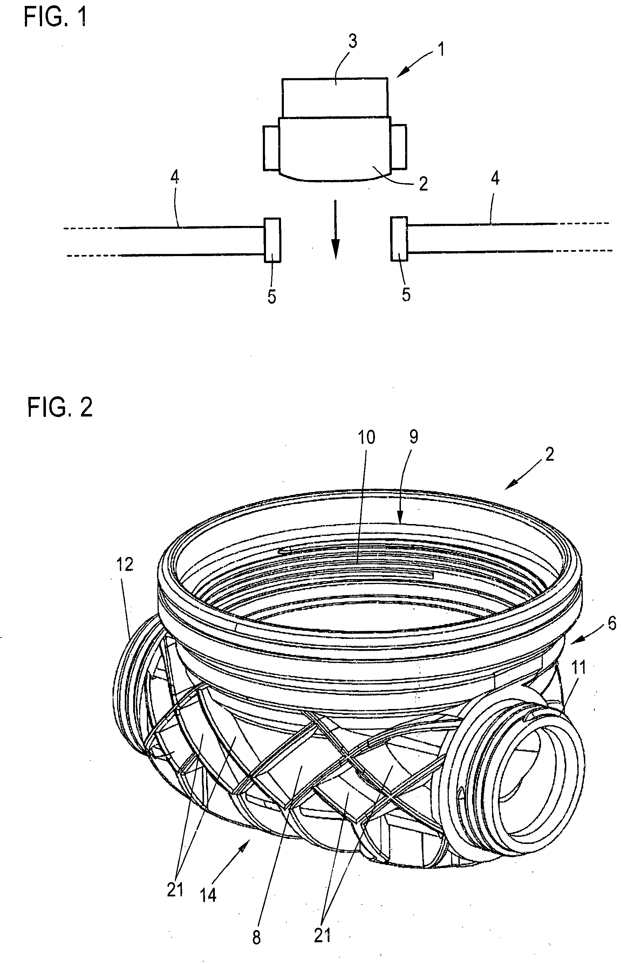

Fig. 1 zeigt eine Prinzipdarstellung eines erfindungsgemäßen Zählers 1 umfassend ein erfindungsgemäßes Zählergehäuse 2, in das eine Messkapsel 3 eingesetzt ist. Der Zähler 1 wird über das Zählergehäuse 2 in an sich bekannter Weise in eine Rohrleitung 4 eingesetzt, wozu entsprechende Gewindemuffen 5 auf Anschlussstutzen des Zählergehäuses 2 aufgeschraubt werden, welches nachfolgend noch im Detail beschrieben wird. Das zu vermessende Fluid, beispielsweise Wasser, strömt durch die Rohrleitung 4 in das Zählergehäuse 2 und dort zur Messkapsel 3, wo die entsprechenden Messwerte aufgenommen werden, und verlässt das Zählergehäuse 2 über die zweite angeschlossene Rohrleitung.

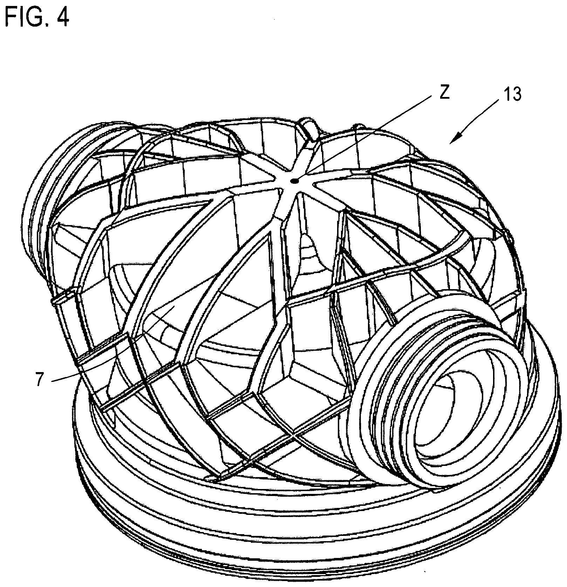

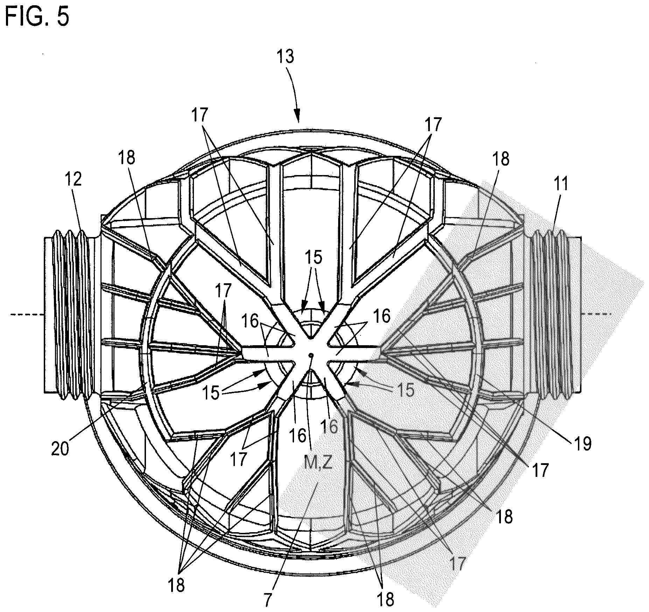

Fig. 2 zeigt in einer detaillierten Ansicht das erfindungsgemäße Zählergehäuse 2. Das Zählergehäuse 2 umfasst einen napfartigen Körper 6, mit einem Boden 7 (siehe Fig. 4 und 5) und einer daran anschließenden ringförmigen Wand 8. Es ergibt sich somit ein hohler Körper mit einem Aufnahmeraum 9, in den die Messkapsel 2 eingesetzt wird. Hierzu ist im Bereich des oberen offenen Körperendes ein Innengewinde 10 ausgebildet, in das die Messkapsel 3 mit einem Außengewinde eingeschraubt wird.

Am Körper 6 sind wandseitig zwei Anschlussstutzen 11, 12 angeordnet, die ringförmig und hohl sind und in das Körperinnere, also das Aufnahmevolumen 9 führen. Über die Anschlussstutzen 11, 12, auf die die Gewindemuffen 5 geschraubt werden, gelangt das Fluid in den und aus dem Zähler 1.

Das Zählergehäuse 2 ist ein einstückiges Bauteil aus Kunststoff, das bevorzugt in einem Spritzgussverfahren hergestellt wurde. Bevorzugt wird gefülltes PPA oder PA verwendet, wobei die Materialwahl hierauf jedoch nicht beschränkt ist.

Das erfindungsgemäße Kunststoff-Zählergehäuse 2 zeichnet sich durch eine spezielle, am Boden 7 ausgebildete Rippenstruktur 13 sowie eine spezielle, an der Wand 8 ausgebildete und sich zwischen den Anschlussstutzen 11 und 12 erstreckende Wandrippenstruktur 14 aus.

Die Geometrie der bodenseitigen Rippenstruktur 13 ist am besten aus Fig. 5 ersichtlich. In dieser ist eine Aufsicht auf den Boden 7 gezeigt. Aus dieser Figur wird zunächst ersichtlich, dass die beiden Anschlussstutzen 11, 12, die jeweils ein Außengewinde aufweisen, versetzt zur Mitte M des Bodens 7 respektive des Körpers 6 angeordnet sind. Über die gestrichelten Linien an den Anschlussstutzen 11, 12 sind jeweils die Stutzenmitten definiert, so dass sich der entsprechende Versatz deutlich ergibt.

Die bodenseitige Rippenstruktur zeichnet sich durch im gezeigten Beispiel sechs Rippen 15 aus, die von einem gemeinsamen Zentrum Z, das im vorliegenden Ausführungsbeispiel mit der Mitte M des Bodens 7 zusammenfällt, radial und mit gleichem Winkelabstand zueinander nach außen verlaufen.

Wie Fig. 5 deutlich zeigt, verzweigen sich die Rippen 15 ein- oder mehrmals. Jede Rippe 15 läuft mit einem zentralen Rippenabschnitt 16 vom Zentrum radial nach außen. Die zentralen Rippenabschnitte 16 verzweigen sich sodann in zweite Rippenabschnitte 17, die, siehe Fig. 5, zum Teil von der Rippenbreite etwas schmäler sind als die Rippenabschnitte 16. Dies gilt für die Rippenabschnitte 17, die, bezogen auf Fig. 5, aus den Rippenabschnitten 16 der vier unteren zentralen Rippenabschnitte hervorgehen. Die zweiten Rippenabschnitte 17, die aus den oberen beiden Rippenabschnitten 17 hervorgehen, haben im Wesentlichen gleichbleibende Breite.

Wie Fig. 5 ferner zeigt, verzweigen sich die zweiten Rippenabschnitte 17 zum Teil ein weiteres Mal in jeweils dritte Rippenabschnitte 18.

Die Rippen 15 respektive die entsprechenden, endständigen Rippenabschnitte 17 respektive 18 laufen bis zum Rand des Bodens 7 und gehen zum Teil in entsprechende Wandrippen über, wie beispielsweise aus Fig. 4, die eine perspektivische Bodenansicht zeigt, deutlich wird.

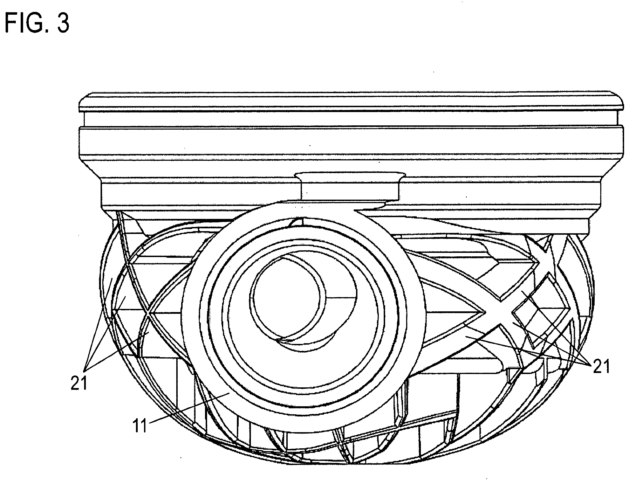

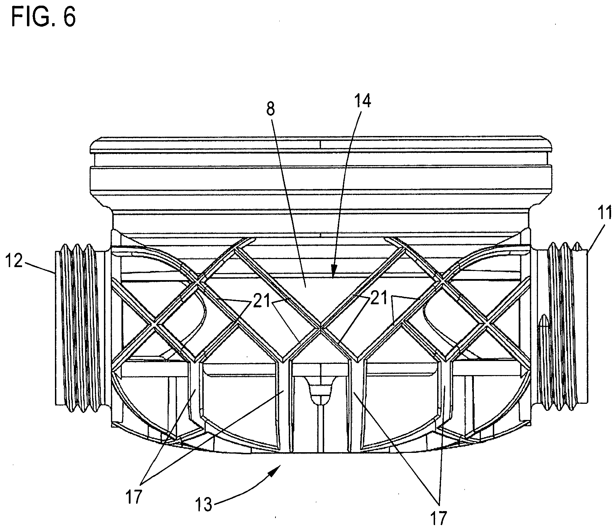

Die Höhe der Rippen 15 respektive der Rippenabschnitte nimmt zum Rand des Bodens 7 hin ab, wie insbesondere Fig. 4 zeigt. Die zentralen Rippenabschnitte 16 weisen eine konstante Höhe auf, siehe Fig. 4, so dass sich um das Zentrum Z herum eine ebene Bodenaufstellfläche ergibt. Die anschließenden Rippenabschnitte 17 und die gegebenenfalls weiterführenden Rippenabschnitte 18 jedoch verringern ihre Höhe, so dass sich insgesamt eine gewölbte Geometrie ergibt, siehe insbesondere die Fig. 3 und 6, die eine Stirn- und eine Seitenansicht des Zählergehäuses 2 zeigen.

Vorgesehen sind des Weiteren zwei Verbindungsstege 19, 20, die bogenförmig ausgeführt sind und letztlich der Kreisform des Bodens 7 folgen. Sie sind benachbart zu den Anschlussstutzen 11, 12 vorgesehen und verbinden mehrere Rippen 15 respektive Rippenabschnitte 17 bzw. 18 miteinander, wie Fig. 5 deutlich zeigt. Diese Verbindungsstege 19 nehmen Spannungen bei Torsionsbelastung auf und tragen zur Torsionssteifigkeit des Bodens 7 bei. Die gezeigte Rippenstruktur 13 mit den sternförmig vom Zentrum Z auslaufenden Rippen ihrerseits erwirkt eine homogene Spannungsverteilung, bezogen auf einen gegebenen Innendruck im Inneren des Zählergehäuses, so dass eine Auswölbung des Zählergehäuses 2 auch bei hohem Innendruck, wie er im Falle von extremen Druckspitzen gegeben sein kann, nicht eintritt. Dem trägt auch die Rippenhöhe Rechnung. Die Rippen sollten eine Höhe von maximal 25 mm aufweisen, wobei natürlich die Rippenhöhe von der Größe des Zählergehäuses 2 respektive der Anschlussweite der Anschlussstutzen 11, 12 abhängt. Entsprechendes gilt für die Rippenbreite, die je nach Auslegung zwischen 0,5 und 6 mm liegen sollte. Natürlich ist die entsprechende höhen- und breitenmäßige Dimensionierung der Rippen auch von den zu erwartenden Druckverhältnissen hinsichtlich Nenndruck, Überlastdruck und Extremdruck in Bezug auf Druckspitzen abhängig.

Neben der spezifischen bodenseitigen Rippenstruktur 13 weist das erfindungsgemäße Zählergehäuse 2 auch eine spezifische Wandrippenstruktur 14 auf, wie sie sich insbesondere aus den Fig. 2, 3 und 6 ergibt. Die Wandrippenstruktur 14 wird durch mehrere im Wesentlichen geradlinige Wandrippen 21 gebildet, die sich, siehe insbesondere Fig. 6, nahezu über die gesamte Wandhöhe bis in den Bereich der radialen Erweiterung des Körpers 6 zum oberen, offenen Ende hin erstrecken. Die Wandrippen 21 verlaufen schräg über die Wand 8, so dass sie sich entsprechend kreuzen, wobei einander kreuzende oder T-förmig aneinander anschließende Wandrippen 21 bevorzugt unter einem Winkel von 90° zueinander verlaufen, wie Fig. 6 zeigt.

Die Wandrippenstrukturen 14 sind beidseits der Anschlussstutzen 11, 12 vorgesehen und erstrecken sich bis zu diesen hin. Wie der Perspektivansicht gemäß Fig. 2 zu entnehmen ist, kann die Höhe der Wandrippen 21 über ihre Länge ebenfalls etwas variieren.

Wie Fig. 2 zeigt, kann die Rippenhöhe vom bodennahen Bereich hin zum oberen Rippenende ansteigen. Auch können, siehe Fig. 2, die Wandrippen 21, die benachbart zu den Anschlussstutzen 11, 12 verlaufen und an diese anschließen, höher sein als die stutzenfernen Wandrippen 21.

Des Weiteren können die Wandrippen, die - siehe Fig. 3 - an der Wandseite, die aufgrund der asymmetrischen Anordnung der Anschlussstutzen 11, 12 größer ist, eine größere Rippenbreite aufweisen, als die an der gegenüberliegenden Wandseite vorgesehenen Wandrippen 21. Dies wird aus Fig. 3 deutlich.

Die Breite der Wandrippen kann auch hier zwischen 0,5 - 6 mm betragen, je nach Dimensionierung des Zählergehäuses. Sie liegt bevorzugt im Bereich zwischen 2 - 4 mm. Die Höhe der Wandrippen sollte maximal 15 mm betragen, sie liegt bevorzugt im Bereich von maximal 10 mm.

Die Wandrippen dienen insbesondere der Erhöhung der Torsionssteifigkeit. Aufgrund der diagonalen Anordnung der Wandrippen 21 und der Realisierung der entsprechenden Rippenkreuzungen respektive des entsprechenden Rippenverlaufs in Verbindung mit der Anbindung der Wandrippen bzw. der Führung der Wandrippen bis in den Bereich der Anschlussstutzen kann das Zählergehäuse extrem torsionssteif ausgeführt werden.

Zweckmäßig ist auch der Übergang der Wandrippen in die entsprechenden Rippenabschnitte der bodenseitigen Rippenstruktur 13, wie in den Fig. 2, 5 und 6 zu entnehmen ist.

Das erfindungsgemäße Zählergehäuse weist aufgrund der erfindungsgemäß vorgesehenen stern- oder strahlenförmigen Bodenrippenstruktur sowie der diagonalen Wandrippenstruktur eine extrem hohe Steifigkeit auf. D. h., dass das Zählergehäuse auch hohen Beanspruchungen auf Zug, Druck oder Torsion ohne nennenswerte Verformung standhält. Bei Belastung gegebene Spannungen sind aufgrund der Rippenanordnung und der Rippengeometrie gering respektive weit reduziert, wie auch eine möglichst homogene Spannungsverteilung im Lastfall gegeben ist. Die Verbindung der Wandrippen und der Bodenrippen liefert einen zusätzlichen Beitrag zur Spannungshomogenität und Steifigkeit. Schließlich kann das Zählergehäuse mit relativ geringem Materialaufwand hergestellt werden, so dass es ein relativ geringes Gewicht aufweist.

### Bezugszeichenliste

- 1: Zähler
- 2: Zählergehäuse
- 3: Messkapsel
- 4: Rohrleitung
- 5: Gewindemuffe
- 6: Körper
- 7: Boden
- 8: Wand
- 9: Aufnahmeraum
- 10: Innengewinde
- 11: Anschlussstutzen
- 12: Anschlussstutzen
- 13: Rippenstruktur
- 14: Wandrippenstruktur
- 15: Rippe
- 16: Rippenabschnitt
- 17: Rippenabschnitt
- 18: Rippenabschnitt
- 19: Verbindungssteg
- 20: Verbindungssteg
- 21: Wandrippe

## Patentansprüche

1. Zählergehäuse aus Kunststoff, insbesondere für einen Fluidzähler, umfassend einen napfartigen Körper mit einem Boden und einer daran anschließende ringförmige Wand mit daran angeformten, in das Körperinnere führenden hohlen Anschlussstutzen, wobei an der Außenseite des Bodens (7) mehrere von einem Zentrum (Z) strahlenförmig abgehende, sich verzweigende und zum Bodenrand laufende Rippen (15) und an der Außenseite der Wand (8) mehrere, einander zumindest zum Teil kreuzende und über wenigstens einen Teil der Wandhöhe laufende Wandrippen (21) ausgebildet sind.

2. Zählergehäuse nach Anspruch 1, **dadurch gekennzeichnet, dass** sich zumindest ein Teil der bodenseitigen Rippen (15) ausgehend von einem zentralen Rippenabschnitt (16) ein erstes mal in zwei auseinander laufende zweite Rippenabschnitte (17) verzweigen, die sich zumindest teilweise ein zweites mal in jeweils zwei dritte Rippenabschnitte (18) verzweigen.

3. Zählergehäuse nach Anspruch 1 oder 2, **dadurch gekennzeichnet, dass** die Höhe der Rippen (15) maximal 25mm beträgt.

4. Zählergehäuse nach einem der vorangehenden Ansprüche, **dadurch gekennzeichnet, dass** die Höhe zumindest eines Teils der Rippen (15) zum Bodenrand hin abnimmt.

5. Zählergehäuse nach einem der vorangehenden Ansprüche, **dadurch gekennzeichnet, dass** die Breite der Rippen (15) zwischen 0,5mm und 6mm beträgt.

6. Zählergehäuse nach einem der vorangehenden Ansprüche, **dadurch gekennzeichnet, dass** die Breite der Rippen (15) zum Bodenrand hin abnimmt.

7. Zählergehäuse nach einem der vorangehenden Ansprüche, **dadurch gekennzeichnet, dass** bodenseitig ein oder mehrere wenigstens zwei Rippen (15) oder Rippenabschnitte (17, 18) verbindende Verbindungsstege (19, 20) vorgesehen sind.

8. Zählergehäuse nach Anspruch 7, **dadurch gekennzeichnet, dass** zwei Verbindungsstege (19, 20) vorgesehen sind, die benachbart zu den Anschlussstutzen (11, 12) angeordnet sind.

9. Zählergehäuse nach Anspruch 8, **dadurch gekennzeichnet, dass** die beiden Verbindungsstege (19, 20) bogenförmig verlaufen.

10. Zählergehäuse nach einem der vorangehenden Ansprüche, **dadurch gekennzeichnet, dass** die Wandrippen (21) im gesamten Wandbereich zwischen den beiden Anschlussstutzen (11, 12) vorgesehen sind.

11. Zählergehäuse nach einem der vorangehenden Ansprüche, **dadurch gekennzeichnet, dass** die Höhe der Wandrippen (21) maximal 15mm beträgt.

12. Zählergehäuse nach einem der vorangehenden Ansprüche, **dadurch gekennzeichnet, dass** die Höhe zumindest eines Teils der Wandrippen (21) zum Boden hin abnimmt.

13. Zählergehäuse nach einem der vorangehenden Ansprüche, **dadurch gekennzeichnet, dass** die Breite der Wandrippen (21) zwischen 0,5mm und 6mm beträgt.

14. Zählergehäuse nach einem der vorangehenden Ansprüche, da die maximale Breite der Wandrippen (21) gleich oder breiter als die maximale Breite der Rippen (15) ist.

15. Zählergehäuse nach einem der vorangehenden Ansprüche, **dadurch gekennzeichnet, dass** zumindest ein Teil der Rippen (15) oder der Rippenabschnitte (17, 18) und ein Teil der Wandrippen (21) am Bodenrand direkt in einander übergehen.

16. Zählergehäuse nach einem der vorangehenden Ansprüche, **dadurch gekennzeichnet, dass** es ein Spritzgussteil aus PPA oder PA ist.

17. Zähler, insbesondere Wasserzähler, umfassend ein Zählergehäuse (2) nach einem der vorangehenden Ansprüche.

## Claims

1. Plastics meter housing, in particular for a fluid meter, comprising a bowl-like body having a base and a thereto adjoining annular wall having hollow connection pieces integrally formed thereon and leading into the interior of the body, wherein on the outer side of the base (7) are configured a plurality of ribs (15), which radiate from a center (Z), branch and run to the base rim, and on the outer side of the wall (8), a plurality of wall ribs (21), which at least partially intersect and run over at least a part of the wall height.

2. Meter housing according to Claim 1, **characterized in that** at least some of the base-side ribs (15), radiating from a central rib portion (16), branch for a first time into two diverging second rib portions (17), at least some of which branch for a second time into respectively two third rib portions (18).

3. Meter housing according to Claim 1 or 2, **characterized in that** the height of the ribs (15) is maximally 25 mm.

4. Meter housing according to one of the preceding claims, **characterized in that** the height of at least some of the ribs (15) decreases toward the base rim.

5. Meter housing according to one of the preceding claims, **characterized in that** the width of the ribs (15) is between 0.5 mm and 6 mm.

6. Meter housing according to one of the preceding claims, **characterized in that** the width of the ribs (15) decreases toward the base rim.

7. Meter housing according to one of the preceding claims, **characterized in that** on the base side are provided one or more connecting webs (19, 20), which connect at least two ribs (15) or rib portions (17, 18).

8. Meter housing according to Claim 7, **characterized in that** two connecting webs (19, 20), which are arranged adjacent to the connection pieces (11, 12), are provided.

9. Meter housing according to Claim 8, **characterized in that** the two connecting webs (19, 20) run arcuately.

10. Meter housing according to one of the preceding claims, **characterized in that** the wall ribs (21) are provided in the whole of the wall region between the two connection pieces (11, 12).

11. Meter housing according to one of the preceding claims, **characterized in that** the height of the wall ribs (21) is maximally 15 mm.

12. Meter housing according to one of the preceding claims, **characterized in that** the height of at least some of the wall ribs (21) decreases toward the base.

13. Meter housing according to one of the preceding claims, **characterized in that** the width of the wall ribs (21) is between 0.5 mm and 6 mm.

14. Meter housing according to one of the preceding claims, **characterized in that** the maximum width of the wall ribs (21) is equal to or wider than the maximum width of the ribs (15).

15. Meter housing according to one of the preceding claims, **characterized in that** at least some of the ribs (15) or of the rib portions (17, 18), and some of the wall ribs (21) on the base rim, merge directly into one another.

16. Meter housing according to one of the preceding claims, **characterized in that** it is an injection molded part made of PPA or PA.

17. Meter, in particular a water heater, comprising a meter housing (2) according to one of the preceding claims.

## Revendications

1. Boîtier de compteur en matière synthétique, en particulier pour un compteur de fluide, comprenant un corps en forme de godet présentant un fond et une paroi annulaire se reccordant à celui-ci sur laquelle sont formées des tubulures de raccordement creuses conduisant à l'intérieur du corps, plusieurs nervures (15) partant en faisceau d'un centre (Z), se ramifiant et courant vers la bordure du fond étant formées sur le côté extérieur du fond (7) et plusieurs nervures de paroi (21) se croisant au moins en partie et s'étendant sur au moins une partie de la hauteur de la paroi étant formées sur le côté extérieur de la paroi (8).

2. Boîtier de compteur selon la revendication 1, **caractérisé en ce qu'**au moins une partie des nervures (15) prévues sur le fond se ramifie à partir d'une section centrale (16) de nervure une première fois en deux deuxièmes sections (17) de nervure s'éloignant l'une de l'autre qui se ramifient au moins en partie une deuxième fois en chaque fois deux troisièmes sections de nervure (18).

3. Boîtier de compteur selon les revendications 1 ou 2, **caractérisé en ce que** la hauteur des nervures (15) vaut au plus 25 mm.

4. Boîtier de compteur selon l'une des revendications précédentes, **caractérisé en ce que** la hauteur d'au moins une partie des nervures (15) augmente en direction du bord du fond.

5. Boîtier de compteur selon l'une des revendications précédentes, **caractérisé en ce que** la largeur des nervures (15) est comprise entre 0,5 mm et 6 mm.

6. Boîtier de compteur selon l'une des revendications précédentes, **caractérisé en ce que** la largeur des nervures (15) diminue en direction de la bordure du fond.

7. Boîtier de compteur selon l'une des revendications précédentes, **caractérisé en ce qu'**une ou plusieurs traverses de liaison (19, 20) qui relient au moins deux nervures (15) ou sections de nervure (17, 18) sont prévues du côté du fond.

8. Boîtier de compteur selon la revendication 7, **caractérisé en ce que** deux traverses de liaison (19, 20) sont prévues, lesquelles sont disposées au voisinage des tubulures de raccordement (11, 12).

9. Boîtier de compteur selon la revendication 8, **caractérisé en ce que** les deux traverses de liaison (19, 20) s'étendent en forme d'arc de cercle.

10. Boîtier de compteur selon l'une des revendications précédentes, **caractérisé en ce que** les nervures de paroi (21) sont prévues dans toute la zone de la paroi située entre les deux tubulures de raccordement (11, 12).

11. Boîtier de compteur selon l'une des revendications précédentes, **caractérisé en ce que** la hauteur des nervures de paroi (21) est d'au plus 15 mm.

12. Boîtier de compteur selon l'une des revendications précédentes, **caractérisé en ce que** la hauteur d'au moins une partie des nervures de paroi (21) augmente en direction du fond.

13. Boîtier de compteur selon l'une des revendications précédentes, **caractérisé en ce que** la largeur des nervures de paroi (21) est comprise entre 0,5 mm et 6 mm.

14. Boîtier de compteur selon l'une des revendications précédentes, car la largeur maximale des nervures de paroi (21) est identique ou supérieure à la largeur maximale des nervures (15).

15. Boîtier de compteur selon l'une des revendications précédentes, **caractérisé en ce qu'**au moins une partie des nervures (15) ou des sections de nervure (17, 18) et une partie des nervures de paroi (21) se prolongent directement l'une dans l'autre sur le bord du fond.

16. Boîtier de compteur selon l'une des revendications précédentes, **caractérisé en ce qu'**il est une pièce en PPA ou PA moulée par injection.

17. Compteur, en particulier compteur d'eau, comprenant un boîtier de compteur (2) selon l'une des revendications précédentes.
